# DEMANDE DE BREVET EUROPEEN

(11) **EP 3 175 729 A1**
(43) Date de publication de la demande: **07.06.2017**
(21) Numéro de dépôt: 16002555.7
(22) Date de dépôt: 01.12.2016
(51) Int. Cl.: A43B 5/04, A43B 13/30, A43B 13/36, F16B 25/00

(54) **CHAUSSURE DE SKI INCLUANT UNE SOLUTION OPTIMISÉE DE FIXATION DES PATINS**

(30) Priorité: 03.12.2015 FR 1502521
(71) Demandeur: Salomon S.A.S., 74370 Metz-Tessy (FR)
(72) Inventeur: Marechal, Pierre-Alexis, 74330 Poisy (FR); Couderc, Bernard, 74000 Annecy (FR)

(57) **Abrégé**

Chaussure de ski comprenant au moins :
- un élément de coque en matériau plastique présentant une partie semelle comprenant une surface externe (201) et une surface interne (200) opposée à la surface externe,
- au moins un patin fixé sur la surface externe de la semelle et destiné à venir en contact avec la surface d'un ski, d'une fixation de ski, ou d'une plaque d'interface ski/fixation,
- des moyens de fixation agencés pour fixer ledit patin sur la surface externe de la semelle.

Lesdits moyens de fixation comportent un insert agencé pour se positionner en appui contre la surface interne (200) de la semelle et une vis destinée à traverser le patin et la partie semelle pour se visser dans ledit insert.

## Description

### Domaine technique de l'invention

La présente invention concerne une chaussure de ski, par exemple de ski alpin. L'invention concerne plus particulièrement la solution de fixation des patins sur la semelle de la chaussure de ski.

### Etat de la technique

De manière connue, une chaussure de ski alpin est composée d'au moins trois parties principales :
- un bas de coque rigide en matériau plastique comportant une semelle présentant des embouts venant coopérer avec des éléments de fixation présents sur le ski,
- un collier assemblé de manière pivotante sur le bas de coque et venant enserrer le bas de jambe de l'utilisateur,
- un chausson se logeant à l'intérieur du bas de coque.
Par ailleurs, des patins sont fixés sous la semelle du bas de coque. Un premier patin est positionné sur la partie avant de la chaussure et un deuxième patin est positionné sur la partie arrière de la chaussure. Chaque patin comporte au moins un élément en matériau anti-dérapant, comme du caoutchouc, pour venir en contact avec la surface supérieure du ski.

Dans certaines solutions, les patins sont fixés directement dans la semelle du bas de coque à l'aide de vis auto-foreuses venant percer la semelle du bas de coque. Dans ce type de solution, si l'opération de perçage dans la semelle du bas de coque se déroule mal, le bas de coque n'est alors plus opérationnel et doit alors être remplacé.

Pour résoudre ce problème, il a été proposé dans la demande de brevet EP2829187A1 de fixer chaque patin en employant un insert métallique positionné à l'intérieur du bas de coque et une vis à pas métrique traversant le patin et la semelle du bas de coque pour coopérer par son extrémité avec l'insert. Cependant, les inserts étant métalliques et les vis à pas métrique, la solution s'avère particulièrement coûteuse. De plus elle alourdit la chaussure de ski. De surcroit, au cours du montage, les vis peuvent se bloquer dans les inserts lorsque malencontreusement l'axe de vissage est légèrement différent de celui de l'insert. Dans un tel cas, l'opérateur doit tout démonter, le chausson de la chaussure, la semelle interne, l'insert métallique associé à son étanchéité éventuelle et la vis pour remplacer l'insert détérioré. Ce processus est long et fastidieux pour l'opérateur et par conséquent coûteux d'un point de vue industriel.

Le but de l'invention est de proposer une chaussure de ski incluant une solution de fixation des patins qui soit fiable, d'un coût modéré et qui n'alourdit pas la chaussure.

### Exposé de l'invention

Ce but est atteint par la fourniture d'une chaussure de ski comprenant au moins :
- un élément de coque en matériau plastique présentant une partie semelle comprenant une surface externe (201) et une surface interne (200) opposée à la surface externe,
- au moins un patin fixé sur la surface externe de la semelle et destiné à venir en contact avec la surface d'un ski, d'une fixation de ski, ou d'une plaque d'interface ski/fixation,
- des moyens de fixation agencés pour fixer ledit patin sur la surface externe de la semelle,
- lesdits moyens de fixation comportant un insert agencé pour se positionner en appui contre la surface interne (200) de la semelle et une vis destinée à traverser le patin et la partie semelle pour se visser dans ledit insert,
et dans laquelle :
- ledit insert comporte au moins une douille (70) en matériau plastique,
- ladite vis est de type auto-taraudeuse de manière à venir se visser dans ladite douille.

Le but de l'invention est également atteint par fourniture d'une chaussure qui outre les caractéristiques listées dans le paragraphe précédent comprend toute combinaison techniquement admissible des caractéristiques suivantes :
- la vis auto taraudeuse a un pas supérieur à 0,2 fois le diamètre extérieur de la vis.
- le matériau de la douille est choisi dans les familles polyoxy-méthylène, ou polyamide ou polyuréthane.
- un patin avant est agencé à l'avant de la chaussure et un patin arrière agencé à l'arrière de la chaussure.
- deux premiers inserts sont présents pour la fixation du patin avant.
- les deux premiers inserts comportent chacun une plate-forme et deux douilles.
- pour les deux premiers inserts, la plate-forme est réalisée sous la forme d'une barre présentant une douille à chaque extrémité.
- au moins un second insert est présent pour la fixation du patin arrière.
- le second insert comporte une plate-forme en forme de T et une douille agencée à chaque extrémité libre de la plate-forme.
- l'élément de coque comporte des logements de forme adaptée réalisée sur la surface interne de la semelle pour recevoir chaque insert.
- chaque insert est maintenu dans un logement par clipsage.

### Brève description des figures

D'autres caractéristiques et avantages vont apparaître dans la description détaillée qui suit faite en regard des dessins annexés dans lesquels :
- la figure 1 représente en vue de côté une chaussure de ski alpin d'un design classique,
- la figure 2 montre une vue en perspective schématique du côté arrière d'une chaussure de ski classique, le collier étant assemblé sur le bas de coque et représenté en pointillés pour mieux comprendre l'architecture de la chaussure,

- la figure 3 illustre l'architecture classique d'un bas de coque, vu du côté latéral, sur lequel sont assemblés les patins,
- la figure 4 représente une vue en éclatée et en perspective qui permet d'illustrer la fixation des patins sur la semelle du bas de coque,
- la figure 5 représente une vue en éclatée, de côté et simplifiée qui permet d'illustrer la fixation des patins sur la semelle du bas de coque,
- la figure 6 représente une vue de l'intérieur de la chaussure de ski, montrant le positionnement des inserts employés pour fixer les patins,
- la figure 7 représente une douille employée dans la solution de fixation de l'invention,
- les figures 8a, 8b, 8c, 8d représentent des variantes de réalisation de la douille.

### Description détaillée d'au moins un mode de réalisation

La présente invention se rapporte à une chaussure de ski. Il s'agit, de préférence, d'une chaussure de ski alpin de type « entrée avant » mais il peut s'agir également d'une chaussure de ski destinée à la pratique du ski de randonnée, voire du ski de fond.

Dans la suite de la description, les termes « supérieur », « inférieur », « dessus », « dessous », « haut », « bas » et autres termes équivalents doivent être compris par rapport à un axe vertical qui est parallèle à la tige de la chaussure.

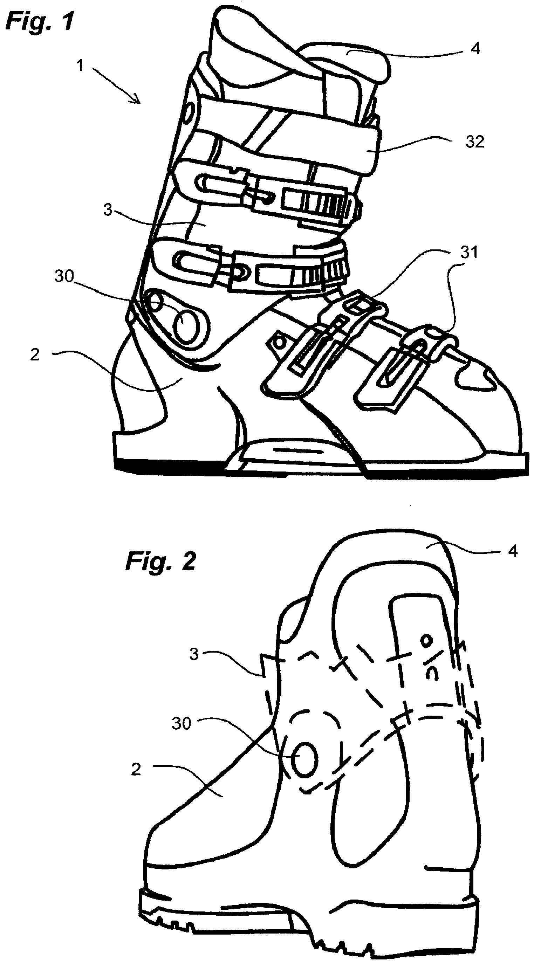

De manière connue, une chaussure de ski alpin 1 à coque rigide telle que représentée sur la figure 1 comporte une partie inférieure, dénommée communément bas de coque 2, une partie supérieure, dénommée communément collier 3 et un chausson 4. Comme représenté sur la figure 2, le collier 3 est assemblé de manière pivotante sur le bas de coque à l'aide d'une articulation 30, de manière à permettre une rotation relative entre le collier 3 et le bas de coque 2. Grâce à cet agencement, l'utilisateur garde la possibilité de faire des mouvements de flexion lors de la pratique du ski ou de la marche, sans être gêné par la rigidité de la coque, ce qui lui confère un certain confort dans sa pratique. Le chausson 4 est pour sa part logé, généralement de manière amovible, dans le bas de coque 2. Des moyens de fermeture de la chaussure comportant plusieurs crochets 31 et éventuellement une sangle 32, dite sangle bas de jambe, sont prévus pour venir serrer la chaussure sur le pied et le bas de la jambe de l'utilisateur. Les crochets 31, par exemple au nombre de quatre sur la figure 1, sont prévus sur le collier 3 et sur le bas de coque 2.

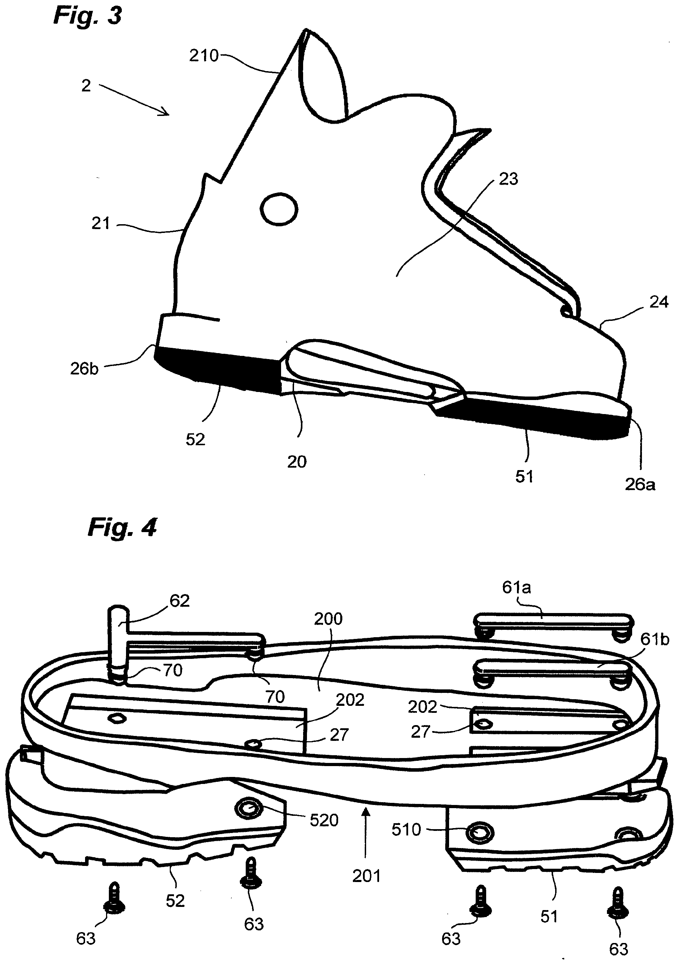

En référence à la figure 3, un bas de coque de chaussure de ski comporte pour sa part :
- une semelle 20 qui correspond à la partie inférieure du bas de coque et qui est destiné à venir se fixer sur le ski, celle-ci comprenant une surface interne 200 et une surface externe 201, opposée à la surface interne et pouvant recevoir des patins venant en contact avec la surface du ski,
- des embouts 26a, 26b présents aux deux extrémités de la semelle 20 et qui permettent la fixation de la chaussure de ski dans un dispositif de fixation approprié,
- une arête dorsale 21 qui correspond à la partie du bas de coque qui est destinée à longer le tendon d'Achille du pied,
- un pan médial (non visible) qui correspond à la partie du bas de coque s'étendant du côté médial du pied,
- un pan latéral 23 qui correspond à la partie du bas de coque s'étendant du côté latéral du pied,
- une boîte à orteils 24 située sur l'avant et destiné à loger les orteils du pied,
- un spoiler 210 arrière prolongeant l'arête dorsale 21 vers le haut du bas de coque pour se positionner au niveau du mollet de l'utilisateur.

Le pan latéral et le pan médial se rejoignent d'une part par l'arête dorsale 21 et d'autre part par la boîte à orteils 24. Le pan médial et le pan latéral 23 sont ainsi agencés pour au moins recouvrir le talon du pied, respectivement du côté médial et du côté latéral ainsi que la malléole du pied, respectivement du côté médial et du côté latéral.

La figure 3 montre également les patins 51, 52 décrits ci-dessus, qui sont généralement au nombre de deux sur une chaussure de ski. Un premier patin 51 occupe la partie avant de la chaussure tandis qu'un deuxième patin 52 occupe la partie arrière de la chaussure. Chacun des deux patins 51, 52 épouse le contour externe de la semelle à l'avant et à l'arrière. Chaque patin peut se prolonger au niveau de l'embout avant et de l'embout arrière de la semelle. Chaque patin comporte ainsi une surface supérieure destinée à être en contact avec la surface externe 201 de la semelle et une surface inférieure, opposée et destinée à être en contact avec le ski, la fixation de ski ou une plaque d'interface ski/fixation, lorsque la chaussure de ski est fixée sur le ski.

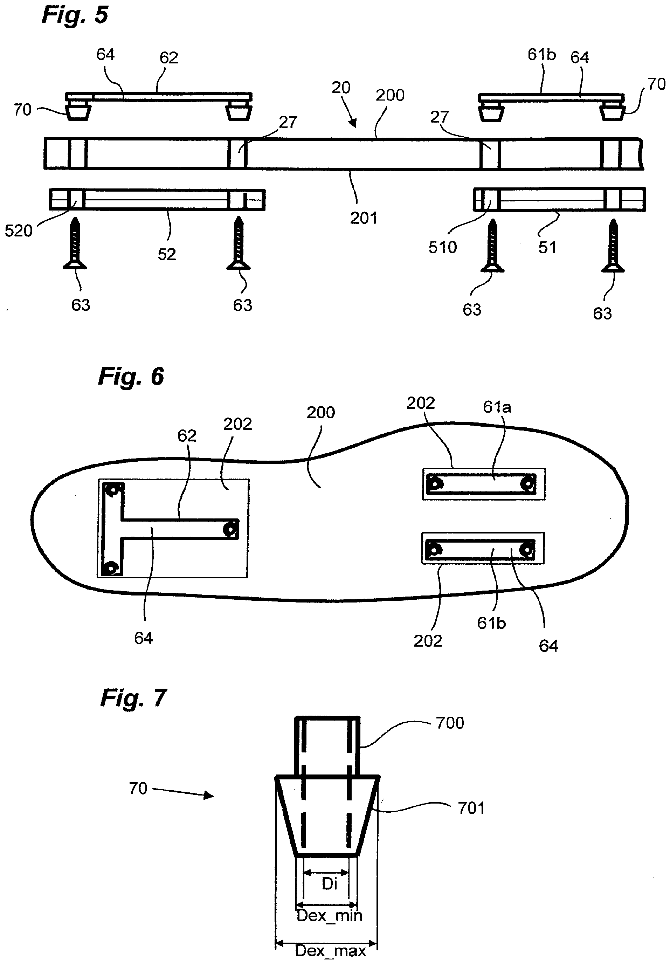

Les figures 4 et 5 représentent juste la semelle 20 du bas de coque 2, les patins et la solution de fixation des patins. Sur ces figures, on peut voir que chaque patin 51, 52 comporte par exemple au moins un élément inférieur réalisé dans un matériau anti-dérapant, par exemple du caoutchouc, en vue de pouvoir mieux adhérer aux surfaces lisses, notamment lors de la marche. Chaque patin comporte également un deuxième élément réalisé dans un autre matériau, par exemple semblable à celui employé pour la semelle du bas de coque. Les deux éléments sont réunis de manière à ne former qu'une seule pièce.
Dans une variante non représentée, les patins ne comportent pas de portion faite d'un matériau anti-dérapant mais seulement d'une ou plusieurs matières plastiques rigides similaires à celles utilisées pour réaliser la semelle. On privilégiera ce type de construction pour la réalisation de chaussures de course pour lesquelles on cherche une très bonne transmission des efforts.

L'invention concerne plus particulièrement les moyens de fixation employés pour fixer lesdits patins sur la surface externe 201 de la semelle du bas de coque de la chaussure de ski. Pour chaque patin, ces moyens de fixation comportent :
- au moins un insert 61 a, 61 b, 62 destiné à être logé à l'intérieur du chaussant formé le bas de coque 2, et agencé pour venir prendre appui contre la surface interne 200 de la semelle,
- au moins une vis auto-taraudeuse 63 engagée par l'extérieur, traversant, dans l'ordre, le patin et la semelle pour venir se visser dans une douille de l'insert et agencé pour prendre appui, par sa tête, contre la surface inférieure du patin.

Comme illustré par la figure 4, le patin avant 51 est par exemple fixé en employant deux inserts 61 a, 61b et le patin arrière 52 est par exemple fixé en employant un seul insert 62. Chaque insert comporte une plate-forme 64 et des douilles 70.

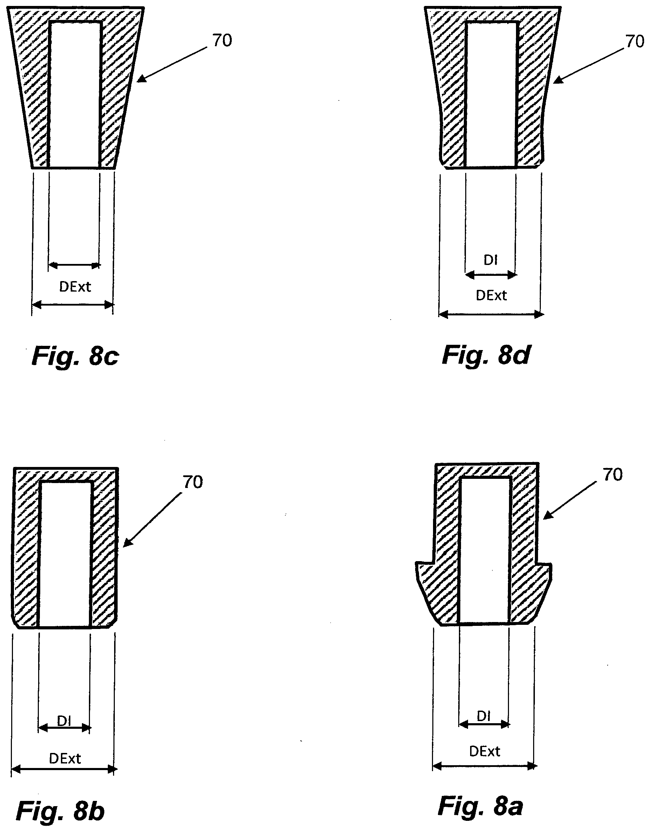

En référence à la figure 7, chaque douille 70 comporte un diamètre intérieur Di prévu pour coopérer avec une vis auto-taraudeuse. Cette vis doit avoir un pas supérieur à 0,2 fois son diamètre extérieur et être compatible avec des matières plastiques. Chaque douille 70 présente par exemple une première partie cylindrique 700 par laquelle elle est rattachée à la plate-forme 64 et une partie tronconique 701. La partie tronconique 701 présente ainsi un diamètre externe variable entre une valeur minimale Dex_min et une valeur maximale Dex_max. Lors du positionnement d'un insert, les douilles 70 sont orientées vers le bas, de sorte à venir en appui par sa forme tronconique contre un orifice de la semelle. Dans une variante de réalisation représentée en coupe à la figure 8a, le diamètre intérieur de la douille 70 est celui d'un trou borgne étanche.

Dans d'autres variantes de réalisation représentées en coupe aux figures 8b, 8c, 8d, la forme extérieure de la douille 70 se limite à une unique partie cylindrique (fig. 8b) ou à une unique partie tronconique (fig. 8c) ou encore à une combinaison d'une portion basse cylindrique avec une portion haute tronconique (fig. 8d). Dans ces variantes, l'étanchéité et la tenue sont garanties par serrage contre le bas de coque.

Pour le patin avant, la plate-forme de chaque insert est par exemple réalisée sous la forme d'une barre rectiligne.
Pour le patin arrière, la plate-forme est par exemple réalisée en forme de T. Préférentiellement, chaque insert est réalisé dans un matériau plastique de type POM (Polyoxy-méthylène par exemple le Delrin - marque déposée), Polyamide ou Polyuréthane. Selon l'invention, les inserts sont réalisés avec les qualités suivantes :
- résistance élevée à la traction,
- faible coefficient de frottement,
- bonne résistance à l'abrasion.
- Bonne résilience
En référence aux figures 4 et 5, les deux inserts 61 a, 61 b employés pour la fixation du patin avant 51 sont agencés en parallèle et orientés parallèlement à la direction allant de l'arrière vers l'avant de la chaussure.
Chacun de ces deux inserts comporte deux douilles 70, situées à chaque extrémité de la plate-forme. Les deux douilles sont destinées à être orientées vers le bas lorsqu'ils sont en place dans la chaussure.

L'insert 62 employé pour fixer le patin arrière 52 est orienté de manière à ce que le T soit inversé par rapport à la direction orientée de l'arrière vers l'avant de la chaussure.
Cet insert 62 comporte par exemple trois douilles 70 formées aux trois extrémités libres de l'insert.
Lorsqu'il est en place, les douilles 70 sont orientées vers le bas lorsqu'il est en place dans la chaussure.

Selon l'invention, comme représenté sur la figure 4, la semelle 20 du bas de coque 2 comporte plusieurs orifices 27. Lorsque les inserts sont en position contre la surface interne 200 de la semelle, chaque douille 70 est positionnée en vis-à-vis d'un orifice distinct. Par ailleurs, le patin avant 51 et le patin arrière 52 comportent également des orifices 510, 520 réalisés de manière à être chacun en vis-à-vis d'un orifice distinct de la semelle. A la périphérie de chacun de leurs orifices, le patin avant 51 et le patin arrière 52 présentent un logement et une surface plane au fond dudit logement, agencées pour loger et servir d'appui pour une tête de vis. Préférentiellement, le bas de coque 2 présente sur la surface interne 200 de la semelle 20 des logements 202 adaptés dans lesquels chaque insert peut être engagé et maintenu, par exemple par clipsage. Chaque insert dispose par exemple de son propre logement 202.
Les orifices réalisés à travers la semelle présentent un diamètre supérieur au diamètre externe minimal de la douille et inférieur au diamètre externe maximal de la douille. Ainsi, les inserts sont maintenus en place même avant que les vis soient mises en place.

Dans un autre mode de réalisation les orifices ménagés à travers la semelle sont cylindriques et de même diamètre que le diamètre externe de la douille, elle-même également cylindrique, l'assemblage étant garanti par serrage. L'homme de métier choisira cependant préférentiellement des orifices légèrement coniques et des douilles de forme complémentaires pour faciliter la mise en place et assurer étanchéité et la tenue en place.

Selon l'invention, la fixation des patins est réalisée de la manière suivante :
- positionnement et clipsage des inserts avants et de l'insert arrière dans la semelle 20 du bas de coque, chaque douille 70 des inserts étant positionnée automatiquement en vis-à-vis d'un orifice de la semelle,
- positionnement du patin avant 51 et du patin arrière 52 contre la surface externe de la semelle du bas de coque, chaque orifice des patins étant situé en vis-à-vis d'un orifice correspondant de la semelle du bas de coque,
- par l'extérieur de la chaussure, enfoncement d'une vis auto-foreuse 63 distincte à travers chaque orifice des patins, puis à travers chaque orifice de la semelle de manière à déboucher dans une douille,
- vissage de la vis dans la douille qui possède un diamètre interne inférieur au diamètre externe de la vis.

Ainsi, chaque patin se trouve enserré entre les vis en appui contre le patin et les inserts. Une plaque interne peut être ensuite positionnée à l'intérieur du bas de coque pour recouvrir ou contourner les inserts et former une surface lisse contre laquelle vient reposer le chausson.

## Revendications

1. Chaussure de ski comprenant au moins :
- un élément de coque en matériau plastique présentant une partie semelle comprenant une surface externe (201) et une surface interne (200) opposée à la surface externe,
- au moins un patin fixé sur la surface externe de la semelle et destiné à venir en contact avec la surface d'un ski, d'une fixation de ski, ou d'une plaque d'interface ski/fixation,
- des moyens de fixation agencés pour fixer ledit patin sur la surface externe de la semelle,
- lesdits moyens de fixation comportant un insert agencé pour se positionner en appui contre la surface interne (200) de la semelle et une vis destinée à traverser le patin et la partie semelle pour se visser dans ledit insert,
**caractérisée en ce que** :
- ledit insert comporte au moins une douille (70) en matériau plastique,
- ladite vis est de type auto-taraudeuse de manière à venir se visser dans ladite douille.

2. Chaussure de ski selon la revendication 1, **caractérisée en ce que** la vis auto taraudeuse a un pas supérieur à 0,2 fois le diamètre extérieur de la vis.

3. Chaussure de ski selon la revendication 1, **caractérisée en ce que** le matériau de la douille est choisi dans les familles polyoxy-méthylène, ou polyamide ou polyuréthane.

4. Chaussure de ski selon la revendication 1, **caractérisée en ce qu'**elle comporte un patin agencé à l'avant de la chaussure, dit patin avant (51), et un patin agencé à l'arrière de la chaussure, dit patin arrière (52).

5. Chaussure selon la revendication 4, **caractérisée en ce qu'**il comporte deux premiers inserts (61 a, 61 b) pour la fixation du patin avant.

6. Chaussure selon la revendication 5, **caractérisée en ce que** les deux premiers inserts comportent chacun une plate-forme et deux douilles (70).

7. Chaussure selon la revendication 5 ou 6, **caractérisée en ce que**, pour les deux premiers inserts, la plate-forme est réalisée sous la forme d'une barre présentant une douille à chaque extrémité.

8. Chaussure selon l'une des revendications 4 à 7, **caractérisée en ce que** qu'il comporte un second insert (62) pour la fixation du patin arrière (52).

9. Chaussure selon la revendication 6, **caractérisée en ce que** le second insert (62) comporte une plate-forme en forme de T et une douille (70) agencée à chaque extrémité libre de la plate-forme.

10. Chaussure selon l'une des revendications 1 à 9, **caractérisée en ce que** l'élément de coque comporte des logements de forme adaptée réalisée sur la surface interne (200) de la semelle pour recevoir chaque insert.

11. Chaussure selon la revendication 10, **caractérisée en ce que** chaque insert est maintenu dans un logement par clipsage.
